(19) Europäisches Patentamt
European Patent Office
Office européen des brevets

(11) **EP 1 792 072 B1**

(12) **EUROPÄISCHE PATENTSCHRIFT**

(45) Veröffentlichungstag und Bekanntmachung des Hinweises auf die Patenterteilung:
**29.12.2010 Patentblatt 2010/52**

(51) Int Cl.:
***F02M 25/07*** *(2006.01)*     ***F02B 47/08*** *(2006.01)*

(21) Anmeldenummer: 05771084.0

(22) Anmeldetag: **15.07.2005**

(86) Internationale Anmeldenummer:
**PCT/DE2005/001261**

(87) Internationale Veröffentlichungsnummer:
**WO 2006/029583 (23.03.2006 Gazette 2006/12)**

(54) **ABGASRÜCKFÜHREINRICHTUNG UND VERFAHREN ZUM BETRIEB EINER ABGASRÜCKFÜHREINRICHTUNG**

EXHAUST-GAS RECIRCULATION DEVICE AND METHOD FOR OPERATING AN EXHAUST-GAS RECIRCULATION DEVICE

DISPOSITIF DE RETOUR DE GAZ D'ECHAPPEMENT ET PROCEDE POUR FAIRE FONCTIONNER UN DISPOSITIF DE RETOUR DE GAZ D'ECHAPPEMENT

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **14.09.2004 DE 102004044893**

(43) Veröffentlichungstag der Anmeldung:
**06.06.2007 Patentblatt 2007/23**

(73) Patentinhaber: **Volkswagen Aktiengesellschaft 38436 Wolfsburg (DE)**

(72) Erfinder:
- **FREITAG, Achim 38302 Wolfenbüttel (DE)**
- **MÜLLER, Jörn 38173 Sickte (DE)**
- **NEE, Lothar 38446 Wolfsburg (DE)**
- **ABERLE, Werner 38542 Leiferde (DE)**
- **GROENENDIJK, Axel 38518 Gifhorn (DE)**

(74) Vertreter: **Scheffler, Jörg Adelheidstrasse 5 30171 Hannover (DE)**

(56) Entgegenhaltungen:
**EP-A- 1 085 176     DE-A1- 10 349 129**

- **PATENT ABSTRACTS OF JAPAN Bd. 2003, Nr. 12, 5. Dezember 2003 (2003-12-05) & JP 2004 150319 A (MITSUBISHI FUSO TRUCK & BUS CORP), 27. Mai 2004 (2004-05-27)**
- **PATENT ABSTRACTS OF JAPAN Bd. 2000, Nr. 08, 6. Oktober 2000 (2000-10-06) & JP 2000 145501 A (TOYOTA MOTOR CORP), 26. Mai 2000 (2000-05-26)**
- **"AUFGELADENE GASMOTOREN MIT AGR UND DREIWEGE-KATALYSATOR" MTZ MOTORTECHNISCHE ZEITSCHRIFT, VIEWEG VERLAG, WIESBADEN, DE, Bd. 61, Nr. 1, Januar 2000 (2000-01), Seiten 54-62, XP000888129 ISSN: 0024-8525**

**EP 1 792 072 B1**

## Beschreibung

Die Erfindung betrifft ein Verfahren zum Betrieb einer Abgasrückführeinrichtung für eine Brennkraftmaschine, insbesondere einen Pkw-Dieseimotor, mit einer mit einem Lufteinlass der Brennkraftmaschine verbundenen Luftzuführleitung und mit einer mit einem Abgasauslass der Brennkraftmaschine verbundenen Abgasleitung, wobei in der Abgasleitung eine einen in der Luftzuführleitung angeordneten Verdichter antreibende Turbine angeordnet ist und wobei die Abgasleitung über eine in Strömungsrichtung hinter der Turbine abzweigende Abgasrückführleitung mit der Luftzuführleitung verbunden ist, insbesondere einer Abgasrückführeinrichtung, wobei im Betrieb der Brennkraftmaschine Abgas von dem Abgasauslass in den Lufteinlass über die Abgasrückführleitung zurückströmbar ist und wobei die Abgasrückführleitung sowohl in einem Niedriglastbereich als auch in einem Volllastbereich der Brennkraftmaschine ein Rückströmen des Abgases ermöglichend geöffnet ist

Ein gattungsgemäßes Verfahren ist beispielsweise aus der EP 1 085 176 A2 bekannt. Im Faile von niedriger bis mittlerer Motorleistung liegt das AGR-Verhältnis bei ca. 40-60 %. In einem Fall von mittlerer bis hoher Motorleistung liegt das AGR-Verhältnis bei ca. 50-70 %.

Eine Abgasrückführeinrichtung ist aus einem Verbrennungsmotor nach DE 691 30 976 T2 bekannt Der Verbrennungsmotor weist einen Abgasturbolader auf, wobei eine Abgasrückführleitung in Strömungsrichtung hinter einer in einer Abgasleitung des Verbrennungsmotors angeordneten Turbine des Abgasturboladers als Niederdruckleitung abzweigen kann. Die Abgasrückführleitung kann vor einem in einer Luftzuführleitung des Verbrennungsmotors angeordneten Verdichter an die Luftzuführleitung angeschlossen sein. Zwischen einem Zylinder des Verbrennungsmotors vorgeschalteten Ansaugkanal und dem Verdichter ist in der Luftzuführleitung eine Drosseiklappe zur Drosselung von Ansaugluft des Verbrennungsmotors angeordnet. Die drosselbare Ansaugluft umfasst Frischluft und gegebenenfalls dieser beigemischtes Abgas, eine Einstellung des Verhältnisses von Frischluft und Abgas in einem Frischluft-Abgas-Gemisch ist mittels der Drosselklappe nicht möglich. Die Abgasrückführleitung umfasst zudem einen Abgasrückführkühler, und durch die Abgasrückführleitung kann in einem Bereich hoher Last Abgas zurückgeführt werden. Vor der Turbine des Abgasturboladers kann außerdern eine weitere Abgasrückführleitung als Hochdruckleitung abzweigen, durch die in einem Bereich geringer Last Abgas urückgeführt werden kann.

Ferner offenbart DE 198 21 792 C2 eine eine Abgasrückführeinrichtung aufweisende Brennkraftmaschine mit einem Abgasturbolader, einer Ladeluftleitung und einer Abgasrückführleitung, wobei in der Ladetuftleitung eine Düse-Diffusor-Einheit angeordnet ist. Eine Abgasentnahme kann an einem Auslasssammier der Brennkraftmaschine, und zwar vor einer Abgasturbine des Abgasturboladers, erfolgen. Zur Steuerung eines Massendurchsatzes durch die Düse-Diffusor-Einheit ist parallel dazu eine von der Ladeluftleitung abzweigende, in einen Einlasssammler der Brennkraftmaschine mündende Bypass-Leitung vorgesehen, die ein als Drosselklappe ausgeführtes Steuerventil aufnimmt.

Eine Abgasrückführung an einer aufgeladenen Brennkraftmaschine offenbart darüber hinaus DE 195 21 573 C2. Dabei wird Abgas aus einem Abgasrohr einer Turbine eines Abgasturboladers zugeführt, und ein mit der Turbine verbundener Verdichter führt Ladeluft einem Ladeluftrohr zu. Eine Abgasentnahme kann an dem Abgasrohr in eine mittels eines Rückschlagventils angeschlossene Abgasleitung erfolgen. Das entnommene Abgas durchströmt nicht die Turbine des Abgasturboladers.

Aus Patent Abstracts of Japan JP 06280684 ist ein Abgasrückführsystem eines Viertaktmotors bekannt. Abgas kann an zwei unterschiedlichen Stellen an einem Abgaskrümmer des Viertaktmotors entnommen und entweder direkt einem Ansaugkrümmer des Viertaktmotors oder einem Ansaugrohr zugeführt werden.

Einen Dieselmotor mit einer Abgasrückführvorrichtung offenbart Patent Abstracts of Japan 2001073884. Darin ist in einem Abgasrohr, das an einen Abgaskrümmer des Dieselmotors angeschlossen ist, in Strömungsrichtung des Abgases vor einem Turbolader ein Abzweig eines Abgasrückführüberganges vorgesehen. Der Abgasrückführübergang, in dem ein Abgaskühler vorgesehen ist, mündet in Strömungsrichtung vor einem Einlasskrümmer des Dieselmotors in einen Ansaugübergang.

Außerdem ist aus Patent Abstracts of Japan 2002285854 ein Dieselaggregat mit einem Abgasturbolader und einer Abgasrückführanlage bekannt. Dabei strömt Abgas aus einem Abgaskrümmer entweder in eine Turbine des Abgasturboladers oder direkt in einen Abgasrückführübergang der Abgasrückführanlage. Der Abgasrückführübergang ist an einen Luftzuführübergang, in dem ein Verdichter des Abgasturboladers angeordnet ist und der in einen Ansaugkrümmer mündet, angeschlossen, und zwar in Strömungsrichtung hinter dem Verdichter.

Darüber hinaus offenbart DE 102 46 405 A1 ein Verbrennungsmotorsteuerungssystem für einen Verbrennungsmotor mit einem Zwangsinduziersystem, das eine Abgasturbine in einem mit einem Abgassystem verbundenen Abgasrohr und eine Einlassturbine In einem mit einem Einlasssystem verbundenen Einlassrohr aufweist. In Strömungsrichtung vor der Abgasturbine zweigt von dem Abgassystem ein Abgasrückführrohr eines Abgasrückführsystems ab. Das Abgasrückführsystem ist ferner mit einem gesteuerten Abgasrückführkühler versehen.

Daneben offenbart DE 101 01 343 A1 ein Verfahren zu einer Abgasrückführungsregelung bei einem Verbrennungsmotor mit einer Aufladeeinrichtung, einer Abgasrückführleitung und einem Abgasrückführventil. Der Verbrennungsmotor weist eine Abgasleitung mit einer Turbine der Aufladeeinrichtung und eine Ansaugleitung mit einem Verdichter der Aufladeeinrichtung auf. In Strömungsrichtung vor der Turbine zweigt von der Abgasleitung die in die Ansaugleitung mündende Abgasrückführleitung ab.

Vor diesem Hintergrund liegt der Erfindung die Aufgabe zu Grunde, ein Verfahren der eingangs genannten Art anzugeben, das eine Rückführung einer großen Menge Abgases ermöglicht.

Diese Aufgabe wird gelöst mit einem Verfahren zum Betrieb einer Abgasrückführeinrichtung der eingangs genannten Art, bei dem in einem Drehzahlbereich der Brennkraftmaschine von 900 bis 3.000 1/min und einem Mitteldruck in einem Zylinder der Brennkraftmaschine von 0 bis 6 bar die Abgasrückführrate 0 bis 70 % beträgt. Diese Werte werden beispielsweise bei starker Androsselung von in die Luftzuführleitung eingespeister Frischluft erreicht. Der Mitteldruck stellt den über ein gesamtes Arbeitsspiel im Zylinder vorliegenden Druck dar, wobei der Mitteldruck unabhängig von der Brennkraftmaschinengröße ist. Dieser Mitteldruck liegt im Mittel während des Ansaugens, Verdichtens, Ausschiebens und des Verbrennungsvorgangs im Zylinder an. Der Mitteldruck wird wie folgt bestimmt

$$\text{Mitteldruck } p\,/\,\text{bar} \;=\; 0{,}1257 \times \frac{\text{Moment } M\,/\,\text{Nm}}{\text{Hubvolumen } V_h\,/\,\text{l}}$$

Weiterhin wird die Aufgabe mit einem Verfahren zum Betrieb einer Abgasrückführeinrichtung der eingangs genannten Art dadurch gelöst, dass in einem Drehzahlbereich der Brennkraftmaschine von 900 bis 3.500 1/min und einem Mitteldruck in einem Zylinder der Brennkraftmaschine von 6 bis 12 bar die Abgasrückführrate 30 bis 70 % beträgt. Diese Werte werden beispielsweise bei schwacher Androsselung der Frischluft erreicht.

Weiterhin wird die Aufgabe mit einem Verfahren zum Betrieb einer Abgasrückführeinrichtung der eingangs genannten Art, dadurch gelöst dass in einem Drehzahlbereich der Brennkraftmaschine von 900 bis 4.000 1/min und einem Mitteldruck in einem Zylinder der Brennkraftmaschine von 15 bis 20 bar 10 bis 30 % beträgt, sodass auch im Volllastbereich eine wesentliche Abgasrückführrate erreicht wird.

Weiterhin wird die Aufgabe mit einem Verfahren zum Betrieb einer Abgasrückführeinrichtung der eingangs genannten Art dadurch gelöst, dass in einem Drehzahlbereich der Brennkraftmaschine von 900 bis 4.500 1/min und einem Mitteldruck in einem Zylinder der Brennkraftmaschine von 15 bis 25 bar 0 bis 10 % beträgt. Damit wird eine signifikante Abgasrückführung auch im Volllastbereich der Brennkraftmaschine erreicht.

Die Erfindung lässt zahlreiche Ausführungsformen zu. Zur weiteren Verdeutlichung ihres Grundprinzips sind Ausführungsbeispiele davon in der Zeichnung schematisiert dargestellt und werden nachfolgend beschrieben. Diese zeigt in

Fig. 1    eine Brennkraftmaschine mit einer Abgasrückführeinrichtung und

Fig. 2    eine graphische Darstellung verschiedener AGR-Raten-Bereiche.

Sich jeweils entsprechende Elemente sind in allen Figuren mit gleichen Bezugszeichen versehen.

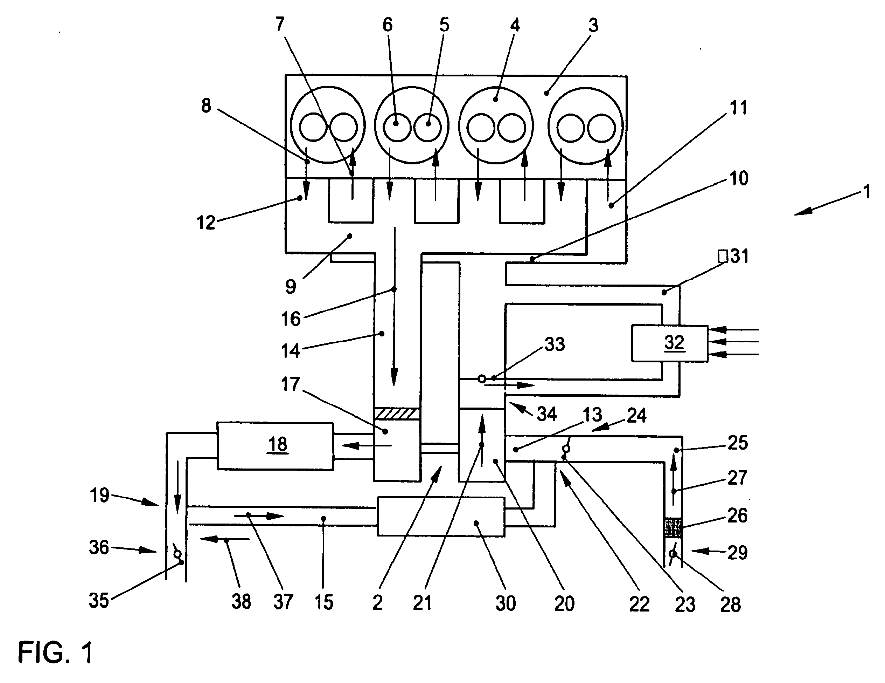

Figur 1 zeigt eine Abgasrückführeinrichtung 1 für eine als Pkw-Dieselmotor mit Abgasturbolader 2 ausgebildete Brennkraftmaschine 3. Die Brennkraftmaschine 3 weist ferner vier Zylinder 4 mit jeweils einem Einlassventil 5 für angesaugte Luft und einem Auslassventil 6 für ausgestoßenes Abgas auf. Einlassluftströme in die Zylinder 4 sind durch Pfeile 7 symbolisiert. Entsprechend sind auch Auslassabgasströme aus den Zylindern 4 durch Pfeile 8 symbolisiert. Ausgestoßenes, durch die Auslassventile 6 austretendes Abgas wird in einem Abgaskrümmer 9 der Brennkraftmaschine 3 zusammengefasst Den Einlassventilen 5 zuzuführende Luft wird in einem Ansaugkrümmer 10 für eine Zuordnung zu den einzelnen Einlassventilen 5 aufgefächert.

Der Ansaugkrümmer 10 ist mit den Einlassventilen 5 mittels jeweils eines Lufteinlasses 11 und der Abgaskrümmer 9 mit den Auslassventilen 6 mittels jeweils eines Abgasauslasses 12 verbunden. An den Ansaugkrümmer 10 ist eine Luftzuführleitung 13 und an den Abgaskrümmer 9 eine Abgasleitung 14 der Abgasrückführeinrichtung 1 abgeschlossen. Ferner ist in der Abgasrückführeinrichtung 1 die Abgasleitung 14 mit der Luftzuführleitung 13 mittels einer Abgasrückführleitung 15 verbunden.

Die Strömungsrichtung des Abgases in der Abgasleitung 14 ist in Figur 1 durch einen Pfeil 16 angegeben. Das aus der Brennkraftmaschine 3 ausgestoßene Abgas wird in der Abgasleitung 14 über eine Turbine 17 des Abgasturboladers 2 und über einen Partikelfilter 18 geführt. Sowohl die Turbine 17 als auch der Partikelfilter 18 ist vor einem Abzweig 19 der Abgasrückfürleitung 15 von der Abgasleitung 14 angeordnet, wobei der Partikelfilter 18 der Turbine 17 nachgeordnet ist. Die Turbine 17 kann vorzugsweise eine variable Turbinengeometrie aufweisen.

Die Turbine 17 des Abgasturboladers 2 treibt einen Verdichter 20 des Abgasturboladers 2 an, wobei der Verdichter 20 in der Luftzuführleitung 13 angeordnet ist, und zwar in durch einen Pfeil 21 symbolisierter Strömungsrichtung der der Brennkraftmaschine 3 zugeführten Luft hinter einer Einmündung 22 der Abgasrückführleitung 15 in die Luftzuführleitung 13. in Strömungsrichtung vor dem Verdichter 20 und vor der Einmündung 22 der Abgasrückführleitung 15 ist eine eine Drosselklappe 23 aufweisende einstellbare Drossel 24 angeordnet.

Mittels der Drossel 24 ist der Durchfluss von aus einer Frischluftleitung 25, die Bestandteil der Luftzuführleitung 13 ist, herangeführter Frischluft einstellbar. Zur Erfassung durch die Frischluftleitung 25 anströmender Frischluftmasse ist in der Frischluftleitung 25 ein Luftmassenmesser 26 in durch einen Pfeil 27 symbolisierter Strömungsrichtung der Frischluft vor der Drossel 24 angeordnet.

Die Drossel in der Frischluftleitung 25 der Luftzuführleitung 13 kann alternativ auch als eine Drosseiklappe 28 aufweisende Drossel 29 in Strömungsrichtung vor dem Luftmassenmesser 26 angeordnet sein.

Die Abgasrückführeinrichtung 1 weist ferner in der Abgasrückführleitung 15 einen Abgaskühler 30 zur Kühlung von rückgeführtem Abgas auf. Der Abgaskühler 30 kann beispielsweise ein Wasserkühler mit eigenem Kühlkreislauf sein, der von einem Kühlkreislauf der Brennkraftmaschine 3 unabhängig ist. Auf diese Weise kann eine Abkühlung des rückgeführten Abgases auf weit unter 100 °C erreicht werden.

Außerdem Ist an der Luftzuführleitung 13 in einer Luftzuführkühlleitung 31 ein Luftkühler 32 angeordnet. Mittels einer Luftkühlregelklappe 33 kann die Luftzuführleitung 13 ganz oder teilweise verschlossen und die der Brennkraftmaschine 3 zugeführte Luft gleichzeitig über einen Abzweig 34 in die Luftzuführkühlleitung 31 eingeleitet werden. Bei Durchströmen des Luftkühlers 32 wird die Luft dann gekühlt und mit verminderter Temperatur der Brennkraftmaschine 3 zugeleitet. In der in Figur 1 dargestellten Position verschließt die Luftkühlregelklappe 33 die Luftzuführleitung 13 vollständig. Die Luftkühlregelklappe 33 kann die Luftzuführkühlleitung 31 vorzugsweise in Abhängigkeit von der Last der Brennkraftmaschine 3 schalten, wobei beispielsweise eine Umgehung des Luftkühlers 32, also ein Öffnen der Luftkühlregelklappe 33, bei unterer und mittlerer Teillast der Brennkraftmaschine 3 und ein Schließen der Luftkühlregelklappe 33 bei Volllast erfolgen kann.

In der Abgasleitung 14 der Abgasrückführeinrichtung 1 befindet sich in Strömungsrichtung hinter dem Abzweig 19 der Abgasrückführleitung 15 eine eine Drosselklappe 35 aufweisende einstellbare Drossel 36 zum gegebenenfalls zusätzlichen Aufstauen von Abgas. Ein Rückfluss von Kondenswasser aus der Abgasrückführleitung 15 entgegen einer durch einen Pfeil 37 symbolisierten Abgasströmungsrichtung in der Abgasrückführleitung 15 ist durch einen weiteren, kleineren Pfeil 38, der in die entgegengesetzte Richtung weist, symbolisiert.

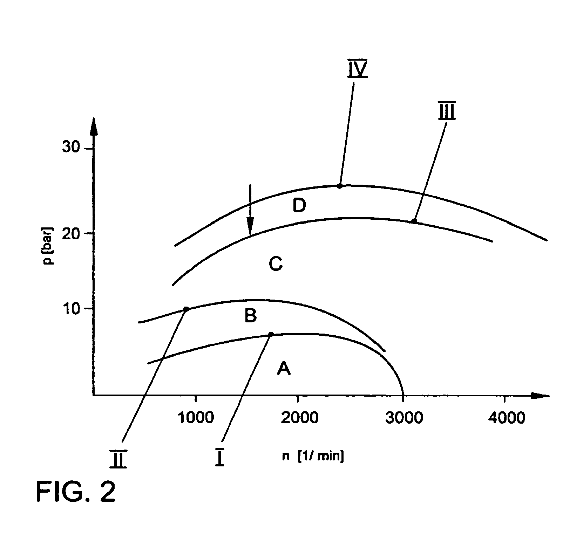

In Figur 2 sind verschiedene AGR-Raten-Bereiche der in Figur 1 gezeigten Brennkraftmaschine und Abgasrückführeinrichtung für unterschiedliche Drosselung im Ansaugbereich graphisch dargestellt. Dabei ist ein Mitteldruck p, angegeben in bar, in einem Zylinder der Brennkraftmaschine über einer Drehzahl n, angegeben in 1/min, der Brennkraftmaschine aufgetragen. Der Mitteldruck p stellt den mittleren Druck über das gesamte Arbeitsspiel im Zylinder dar; der Druck kann in einzelnen Abschnitten des Arbeitsspieles aber sehr viel höher liegen, zum Beispiel kann der Druck während der Verbrennung ca. 200 bar betragen.

Eine in der Graphik nach Figur 2 untenliegende Kurve I grenzt einen Bereich A ab, in dem bei starker Androsselung der Frischluft (Frischluftleitung nahezu geschlossen) in einem Drehzahlbereich der Brennkraftmaschine von in etwa 900 bis in etwa 3.000 1/min und einem Mitteldruck p in einem Zylinder der Brennkraftmaschine von in etwa 0 bis in etwa 6 bar die Abgasrückführrate 0 bis 70 % beträgt.

Eine oberhalb vorgenannter Kurve I liegende Kurve II grenzt einen Bereich B ab, in dem bei schwächerer Androsselung der Frischluft in einem Drehzahlbereich der Brennkraftmaschine von in etwa 900 bis in etwa 3.000 1/min und einem Mitteldruck p in einem Zylinder der Brennkraftmaschine von in etwa 6 bis in etwa 12 bar die Abgasrückführrate 30 bis 70 % beträgt.

Eine weitere Kurve III grenzt einen Bereich C ab, in dem bei schwacher Drosselung der Frischluft in einem Drehzahlbereich der Brennkraftmaschine von in etwa 900 bis in etwa 4.000 1/min und einem Mitteldruck p in einem Zylinder der Brennkraftmaschine von in etwa 15 bis in etwa 20 bar die Abgasrückführrate 10 bis 30 % beträgt.

Eine letzte Kurve IV grenzt einen Bereich D ab, in dem in einem Drehzahlbereich der Brennkraftmaschine von in etwa 900 bis in etwa 4.500 1/min und einem Mitteldruck p in einem Zylinder der Brennkraftmaschine von in etwa 15 bis 25 bar die Abgasrückführrate 0 bis 10 % beträgt.

**Patentansprüche**

1. Verfahren zum Betrieb einer Abgasrückführeinrichtung (1) für eine Brennkraftmaschine (3), insbesondere einen Pkw-Dieselmotor, mit einer, mit einem Lufteinlass (11) der Brennkraftmaschine (3) verbundenen Luftzuführleitung (13) und mit einer mit einem Abgasauslass (12) der Brennkraftmaschine (3) verbundenen Abgasleitung (14), wobei In der Abgasleitung (14) eine einen in der Luftzuführleitung (13) angeordneten Verdichter (20) antreibende Turbine (17) angeordnet ist und wobei die Abgasleitung (14) über eine in Strömungsrichtung hinter der Turbine (17) abzweigende Abgasrückführleitung (15) mit der Luftzuführleitung (13) verbunden ist, wobei im Betrieb der Brennkraftmaschine (3) Abgas von dem Abgasauslass (12) in den Lufteinlass (11) über die Abgasrückführleitung (15) zurückströmbar ist und wobei die Abgasrückführleitung (15) sowohl in einem Niedriglastbereich als auch in einem Volllastbereich der Brennkraftmaschine (3) ein Rückströmen des Abgases ermöglichend geöffnet ist, **dadurch gekennzeichnet, dass** in Strömungsrichtung vor dem Verdichter (20) eine einstellbare Drossel (24) angeordnet ist und in einem Drehzahlbereich der Brennkraftmaschine (3) von 900 bis 3.000 1/min und einem Mitteldruck (p) in einem Zylinder (4) der Brennkraftmaschine (3) von 0 bis 6 bar die Abgasrückführrate 0 bis 70 % beträgt.

**2.** Verfahren nach Anspruch 1, **dadurch gekennzeichnet, dass** in der Abgasleitung (14) in Strömungsrichtung hinter dem Abzweig (19) der Abgasrückführleitung (15) eine eine Drosselklappe (35) aufweisende Drossel (36) angeordnet ist.

**3.** Verfahren zum Betrieb einer Abgasrückführeinrichtung (1) für eine Brennkraftmaschine (3), insbesondere einen Pkw-Dieselmotor, mit einer mit einem Lufteinlass (11) der Brennkraftmaschine (3) verbundenen Luftzuführleitung (13) und mit einer mit einem Abgasauslass (12) der Brennkraftmaschine (3) verbundenen Abgasleitung (14), wobei in der Abgasleitung (14) eine einen in der Luftzuführleitung (13) angeordneten Verdichter (20) antreibende Turbine (17) angeordnet ist und wobei die Abgasleitung (14) über eine in Strömungsrichtung hinter der Turbine (17) abzweigende Abgasrückführleitung (15) mit der Luftzuführleitung (13) verbunden ist, wobei im Betrieb der Brennkraftmaschine (3) Abgas von dem Abgasauslass (12) in den Lufteinlass (11) über die Abgasrückführleitung (15) zurückströmbar ist und wobei die Abgasrückführleitung (15) sowohl in einem Niedriglastbereich als auch in einem Volllastbereich der Brennkraftmaschine (3) ein Rückströmen des Abgases ermöglichend geöffnet ist, **dadurch gekennzeichnet, dass** in Strömungsrichtung vor dem Verdichter (20) eine einstellbare Drossel (24) angeordnet ist und in einem Drehzahlbereich der Brennkraftmaschine (3) von 900 bis 3.500 1/min und einem Mitteldruck (p) in einem Zylinder (4) der Brennkraftmaschine (3) von 6 bis 12 bar die Abgasrückführrate 30 bis 70 % beträgt.

**4.** Verfahren nach Anspruch 3, **dadurch gekennzeichnet, dass** in der Abgasleitung (14) in Strömungsrichtung hinter dem Abzweig (19) der Abgasrückführleitung (15) eine eine Drosselklappe (35) aufweisende Drossel (36) angeordnet ist.

**5.** Verfahren zum Betrieb einer Abgasrückführeinrichtung (1) für eine Brennkraftmaschine (3), insbesondere einen Pkw-Dieselmotor, mit einer mit einem Lufteinlass (11) der Brennkraftmaschine (3) verbundenen Luftzuführleitung (13) und mit einer mit einem Abgasauslass (12) der Brennkraftmaschine (3) verbundenen Abgasleitung (14), wobei in der Abgasleitung (14) eine einen in der Luftzuführleitung (13) angeordneten Verdichter (20) antreibende Turbine (17) angeordnet ist und wobei die Abgasleitung (14) über eine in Strömungsrichtung hinter der Turbine (17) abzweigende Abgasrückführleitung (15) mit der Luftzuführleitung (13) verbunden ist, wobei im Betrieb der Brennkraftmaschine (3) Abgas von dem Abgasauslass (12) in den Lufteinlass (11) über die Abgasrückführleitung (15) zurückströmbar ist und wobei die Abgasrückführleitung (15) sowohl in einem Niedriglastbereich als auch in einem Volllastbereich der Brennkraftmaschine (3) ein Rückströmen des Abgases ermöglichen geöffnet ist, **dadurch gekennzeichnet, dass** in Strömungsrichtung vor dem Verdichter (20) eine einstellbare Drossel (24) angeordnet ist und in einem Drehzahlbereich der Brennkraftmaschine (3) von 900 bis 4.000 1/min und einem Mitteldruck (p) in einem Zylinder (4) der Brennkraftmaschine (3) von 15 bis 20 bar die Abgasrückführrate 10 bis 30 % beträgt.

**6.** Verfahren nach Anspruch 5, **dadurch gekennzeichnet, dass** in der Abgasleitung (14) in Strömungsrichtung hinter dem Abzweig (19) der Abgasrückführleitung (15) eine eine Drosselklappe (35) aufweisende Drossel (36) angeordnet ist.

**7.** Verfahren zum Betrieb einer Abgesrückführeinrichtung (1) für eine Brennkraftmaschine (3), insbesondere einen Pkw-Dieselmotor, mit einer mit einem Lufteinlass (11) der Brennkraftmaschine (3) verbundenen Luftzuführleitung (13) und mit einer mit einem Abgasauslass (12) der Brennkraftmaschine (3) verbundenen Abgasleitung (14), wobei in der Abgasleitung (14) eine einen in der Luftzuführleitung (13) angeordneten Verdichter (20) antreibende Turbine (17) angeordnet ist und wobei die Abgasleitung (14) über eine in Strömungsrichtung hinter der Turbine (17) abzweigende Abgasrückführleitung (15) mit der Luftzuführleitung (13) verbunden ist, wobei im Betrieb der Brennkraftmaschine (3) Abgas von dem Abgasauslass (12) in den Lufteinlass (11) über die Abgasrückführleitung (15) zurückströmbar ist und wobei die Abgasrückführleitung (15) sowohl in einem Niedriglastbereich als auch in einem Volllastbereich der Brennkraftmaschine (3) ein Rückströmen des Abgases ermöglichend geöffnet ist, **dadurch gekennzeichnet, dass** in Strömungsrichtung vor dem Verdichter (20) eine einstellbare Drossel (24) angeordnet ist und in einem Drehzahlbereich der Brennkraftmaschine (3) von 900 bis 4.500 1/min und einem Mitteldruck (p) in einem Zylinder (4) der Brennkraftmaschine (3) von 15 bis 25 bar die Abgasrückführrate 0 bis 10 % beträgt.

**8.** Verfahren nach Anspruch 7, **dadurch gekennzeichnet, dass** in der Abgasleitung (14) in Strömungsrichtung hinter dem Abzweig (19) der Abgasrückführleitung (15) eine eine Drosselklappe (35) aufweisende Drossel (36) angeordnet ist.

**Claims**

1. Method for operating an exhaust-gas recirculation device (1) for an internal combustion engine (3), in particular a passenger motor vehicle diesel engine, having an air supply line (13) which is connected to an air inlet (11) of the internal combustion engine (3) and having an exhaust line (14) which is connected to an exhaust-gas outlet (12) of the internal combustion engine (3), with a turbine (17) being arranged in the exhaust line (14), which turbine drives a compressor (20) arranged in the air supply line (13), and with the exhaust line (14) being connected to the air supply line (13) via an exhaust-gas recirculation line (15) which branches off downstream of the turbine (17) in the flow direction, with it being possible during operation of the internal combustion engine (3) for exhaust gas to flow back from the exhaust-gas outlet (12) into the air inlet (11) via the exhaust-gas recirculation line (15), and with the exhaust-gas recirculation line (15) being open, so as to allow the exhaust gas to flow back, both in a low-load range and also in a full-load range of the internal combustion engine (3), **characterized in that** an adjustable throttle (24) is arranged upstream of the compressor (20) in the flow direction, and in a rotational speed range of the internal combustion engine (3) from 900 to 3000 rpm and a mean pressure (p) in a cylinder (4) of the internal combustion engine (3) from 0 to 6 bar, the exhaust-gas recirculation rate is 0 to 70%.

2. Method according to Claim 1, **characterized in that** in the exhaust line (14) a throttle (36) which has a throttle flap (35) is arranged downstream of the branch (19) of the exhaust-gas recirculation line (15) in the flow direction.

3. Method for operating an exhaust-gas recirculation device (1) for an internal combustion engine (3), in particular a passenger motor vehicle diesel engine, having an air supply line (13) which is connected to an air inlet (11) of the internal combustion engine (3) and having an exhaust line (14) which is connected to an exhaust-gas outlet (12) of the internal combustion engine (3), with a turbine (17) being arranged in the exhaust line (14), which turbine drives a compressor (20) arranged in the air supply line (13), and with the exhaust line (14) being connected to the air supply line (13) via an exhaust-gas recirculation line (15) which branches off downstream of the turbine (17) in the flow direction, with it being possible during operation of the internal combustion engine (3) for exhaust gas to flow back from the exhaust-gas outlet (12) into the air inlet (11) via the exhaust-gas recirculation line (15), and with the exhaust-gas recirculation line (15) being open, so as to allow the exhaust gas to flow back, both in a low-load range and also in a full-load range of the internal combustion engine (3), **characterized in that** an adjustable throttle (24) is arranged upstream of the compressor (20) in the flow direction, and in a rotational speed range of the internal combustion engine (3) from 900 to 3500 rpm and a mean pressure (p) in a cylinder (4) of the internal combustion engine (3) from 6 to 12 bar, the exhaust-gas recirculation rate is 30 to 70%.

4. Method according to Claim 3, **characterized in that** in the exhaust line (14) a throttle (36) which has a throttle flap (35) is arranged downstream of the branch (19) of the exhaust-gas recirculation line (15) in the flow direction.

5. Method for operating an exhaust-gas recirculation device (1) for an internal combustion engine (3), in particular a passenger motor vehicle diesel engine, having an air supply line (13) which is connected to an air inlet (11) of the internal combustion engine (3) and having an exhaust line (14) which is connected to an exhaust-gas outlet (12) of the internal combustion engine (3), with a turbine (17) being arranged in the exhaust line (14), which turbine drives a compressor (20) arranged in the air supply line (13), and with the exhaust line (14) being connected to the air supply line (13) via an exhaust-gas recirculation line (15) which branches off downstream of the turbine (17) in the flow direction, with it being possible during operation of the internal combustion engine (3) for exhaust gas to flow back from the exhaust-gas outlet (12) into the air inlet (11) via the exhaust-gas recirculation line (15), and with the exhaust-gas recirculation line (15) being open, so as to allow the exhaust gas to flow back, both in a low-load range and also in a full-load range of the internal combustion engine (3), **characterized in that** an adjustable throttle (24) is arranged upstream of the compressor (20) in the flow direction, and in a rotational speed range of the internal combustion engine (3) from 900 to 4000 rpm and a mean pressure (p) in a cylinder (4) of the internal combustion engine (3) from 15 to 20 bar, the exhaust-gas recirculation rate is 10 to 30%.

6. Method according to Claim 5, **characterized in that** in the exhaust line (14) a throttle (36) which has a throttle flap (35) is arranged downstream of the branch (19) of the exhaust-gas recirculation line (15) in the flow direction.

7. Method for operating an exhaust-gas recirculation device (1) for an internal combustion engine (3), in particular a passenger motor vehicle diesel engine, having an air supply line (13) which is connected to an air inlet (11) of the internal combustion engine (3) and having an exhaust line (14) which is connected to an exhaust-gas outlet (12) of the internal combustion engine (3), with a turbine (17) being arranged in the exhaust line (14), which turbine drives a compressor (20) arranged in the air supply line (13), and with the exhaust line (14) being connected to the air supply line (13) via an exhaust-gas recirculation line (15) which branches off downstream of the turbine (17) in the flow direction, with it being possible during operation of the internal combustion engine (3) for exhaust gas to flow back from the exhaust-gas outlet (12) into the air inlet (11) via the exhaust-gas recirculation line (15), and with the exhaust-gas recirculation line (15) being open, so as to allow the exhaust gas to flow back, both in a low-load range and also in a full-load range of the internal combustion engine (3), **characterized in that** an adjustable throttle (24) is arranged upstream of the compressor (20) in the flow direction, and in a rotational speed range of the internal combustion engine (3) from 900 to 4500 rpm and a mean pressure (p) in a cylinder (4) of the internal combustion engine (3) from 15 to 25 bar, the exhaust-gas recirculation rate is 0 to 10%.

8. Method according to Claim 7, **characterized in that** in the exhaust line (14) a throttle (36) which has a throttle flap (35) is arranged downstream of the branch (19) of the exhaust-gas recirculation line (15) in the flow direction.

## Revendications

1. Procédé d'exploitation d'un dispositif de retour de gaz d'échappement (1) pour un moteur à combustion interne (3), en particulier un moteur diesel pour voiture de tourisme, avec une conduite d'arrivée d'air (13) reliée à une entrée d'air (11) du moteur à combustion interne (3) et avec une conduite de gaz d'échappement (14) reliée à une sortie de gaz d'échappement (12) du moteur à combustion interne (3), dans lequel une turbine (17) entraînant un compresseur (20) disposé dans la conduite d'arrivée d'air (13) est disposée dans la conduite de gaz d'échappement (14) et dans lequel la conduite de gaz d'échappement (14) est reliée à la conduite d'arrivée d'air (13) au moyen d'une conduite de retour de gaz d'échappement (15) branchée après la turbine (17) dans le sens de l'écoulement, dans lequel, pendant le fonctionnement du moteur à combustion interne (3), des gaz d'échappement peuvent être renvoyés de la sortie de gaz d'échappement (12) dans l'entrée d'air (11) au moyen de la conduite de retour de gaz d'échappement (15), et dans lequel la conduite de retour de gaz d'échappement (15) est ouverte, aussi bien en fonctionnement à faible charge qu'en fonctionnement à pleine charge du moteur à combustion interne (3), permettant un retour des gaz d'échappement, **caractérisé en ce qu'**un papillon réglable (24) est disposé avant le compresseur (20) dans le sens de l'écoulement et, dans une plage de vitesse de rotation du moteur à combustion interne (3) de 900 à 3 000 tr/min et avec une pression moyenne (p) dans un cylindre (4) du moteur à combustion interne (3) de 0 à 6 bar, le taux de retour de gaz d'échappement vaut de 0 à 70 %.

2. Procédé selon la revendication 1, **caractérisé en ce qu'**un papillon (36) présentant un volet (35) est disposé dans la conduite de gaz d'échappement (14) après le branchement (19) de la conduite de retour de gaz d'échappement (15) dans le sens de l'écoulement.

3. Procédé d'exploitation d'un dispositif de retour de gaz d'échappement (1) pour un moteur à combustion interne (3), en particulier un moteur diesel pour voiture de tourisme, avec une conduite d'arrivée d'air (13) reliée à une entrée d'air (11) du moteur à combustion interne (3) et avec une conduite de gaz d'échappement (14) reliée à une sortie de gaz d'échappement (12) du moteur à combustion interne (3), dans lequel une turbine (17) entraînant un compresseur (20) disposé dans la conduite d'arrivée d'air (13) est disposée dans la conduite de gaz d'échappement (14) et dans lequel la conduite de gaz d'échappement (14) est reliée à la conduite d'arrivée d'air (13) au moyen d'une conduite de retour de gaz d'échappement (15) branchée après la turbine (17) dans le sens de l'écoulement, dans lequel, pendant le fonctionnement du moteur à combustion interne (3), des gaz d'échappement peuvent être renvoyés de la sortie de gaz d'échappement (12) dans l'entrée d'air (11) au moyen de la conduite de retour de gaz d'échappement (15), et dans lequel la conduite de retour de gaz d'échappement (15) est ouverte, aussi bien en fonctionnement à faible charge qu'en fonctionnement à pleine charge du moteur à combustion interne (3), permettant un retour des gaz d'échappement, **caractérisé en ce qu'**un papillon réglable (24) est disposé avant le compresseur (20) dans le sens de l'écoulement et, dans une plage de vitesse de rotation du moteur à combustion interne (3) de 900 à 3 500 tr/min et avec une pression moyenne (p) dans un cylindre (4) du moteur à combustion interne (3) de 6 à 12 bar, le taux de retour de gaz d'échappement vaut de 30 à 70 %.

4. Procédé selon la revendication 3, **caractérisé en ce qu'**un papillon (36) présentant un volet (35) est disposé dans la conduite de gaz d'échappement (14) après le branchement (19) de la conduite de retour de gaz d'échappement (15) dans le sens de l'écoulement.

**5.** Procédé d'exploitation d'un dispositif de retour de gaz d'échappement (1) pour un moteur à combustion interne (3), en particulier un moteur diesel pour voiture de tourisme, avec une conduite d'arrivée d'air (13) reliée à une entrée d'air (11) du moteur à combustion interne (3) et avec une conduite de gaz d'échappement (14) reliée à une sortie de gaz d'échappement (12) du moteur à combustion interne (3), dans lequel une turbine (17) entraînant un compresseur (20) disposé dans la conduite d'arrivée d'air (13) est disposée dans la conduite de gaz d'échappement (14) et dans lequel la conduite de gaz d'échappement (14) est reliée à la conduite d'arrivée d'air (13) au moyen d'une conduite de retour de gaz d'échappement (15) branchée après la turbine (17) dans le sens de l'écoulement, dans lequel, pendant le fonctionnement du moteur à combustion interne (3), des gaz d'échappement peuvent être renvoyés de la sortie de gaz d'échappement (12) dans l'entrée d'air (11) au moyen de la conduite de retour de gaz d'échappement (15), et dans lequel la conduite de retour de gaz d'échappement (15) est ouverte, aussi bien en fonctionnement à faible charge qu'en fonctionnement à pleine charge du moteur à combustion interne (3), permettant un retour des gaz d'échappement, **caractérisé en ce qu'**un papillon réglable (24) est disposé avant le compresseur (20) dans le sens de l'écoulement et, dans une plage de vitesse de rotation du moteur à combustion interne (3) de 900 à 4 000 tr/min et avec une pression moyenne (p) dans un cylindre (4) du moteur à combustion interne (3) de 15 à 20 bar, le taux de retour de gaz d'échappement vaut de 10 à 30 %.

**6.** Procédé selon la revendication 5, **caractérisé en ce qu'**un papillon (36) présentant un volet (35) est disposé dans la conduite de gaz d'échappement (14) après le branchement (19) de la conduite de retour de gaz d'échappement (15) dans le sens de l'écoulement.

**7.** Procédé d'exploitation d'un dispositif de retour de gaz d'échappement (1) pour un moteur à combustion interne (3), en particulier un moteur diesel pour voiture de tourisme, avec une conduite d'arrivée d'air (13) reliée à une entrée d'air (11) du moteur à combustion interne (3) et avec une conduite de gaz d'échappement (14) reliée à une sortie de gaz d'échappement (12) du moteur à combustion interne (3), dans lequel une turbine (17) entraînant un compresseur (20) disposé dans la conduite d'arrivée d'air (13) est disposée dans la conduite de gaz d'échappement (14) et dans lequel la conduite de gaz d'échappement (14) est reliée à la conduite d'arrivée d'air (13) au moyen d'une conduite de retour de gaz d'échappement (15) branchée après la turbine (17) dans le sens de l'écoulement, dans lequel, pendant le fonctionnement du moteur à combustion interne (3), des gaz d'échappement peuvent être renvoyés de la sortie de gaz d'échappement (12) dans l'entrée d'air (11) au moyen de la conduite de retour de gaz d'échappement (15), et dans lequel la conduite de retour de gaz d'échappement (15) est ouverte, aussi bien en fonctionnement à faible charge qu'en fonctionnement à pleine charge du moteur à combustion interne (3), permettant un retour des gaz d'échappement, **caractérisé en ce qu'**un papillon réglable (24) est disposé avant le compresseur (20) dans le sens de l'écoulement et, dans une plage de vitesse de rotation du moteur à combustion interne (3) de 900 à 4 500 tr/min et avec une pression moyenne (p) dans un cylindre (4) du moteur à combustion interne (3) de 15 à 25 bar, le taux de retour de gaz d'échappement vaut de 0 à 10 %.

**8.** Procédé selon la revendication 7, **caractérisé en ce qu'**un papillon (36) présentant un volet (35) est disposé dans la conduite de gaz d'échappement (14) après le branchement (19) de la conduite de retour de gaz d'échappement (15) dans le sens de l'écoulement.

FIG. 1

EP 1 792 072 B1

FIG. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1085176 A2
- DE 69130976 T2
- DE 19821792 C2
- DE 19521573 C2
- JP 06280684 B
- DE 10246405 A1
- DE 10101343 A1

**In der Beschreibung aufgeführte Nicht-Patentliteratur**

- *PATENT ABSTRACTS OF JAPAN,* 2001073884
- *PATENT ABSTRACTS OF JAPAN,* 2002285854